# EUROPEAN PATENT SPECIFICATION

(11) **EP 4 474 938 B1**
(45) Date of publication and mention of the grant of the patent: **21.01.2026**
(21) Application number: 24174859.9
(22) Date of filing: 08.05.2024
(51) Int. Cl.: G05D 1/247, G05D 1/248, G05D 1/648

(54) **IMPROVED NAVIGATION FOR A ROBOTIC LAWNMOWER SYSTEM**
VERBESSERTE NAVIGATION FÜR EIN ROBOTISCHES RASENMÄHERSYSTEM
NAVIGATION AMÉLIORÉE POUR SYSTÈME DE TONDEUSE À GAZON ROBOTIQUE

(30) Priority: 09.06.2023 SE 2350705
(43) Date of publication of application: 11.12.2024
(73) Proprietor: Husqvarna AB, 561 82 Huskvarna (SE)
(72) Inventor: Chedid, Michel, Huskvarna (SE); Ärlig, Ulf, Huskvarna (SE)

(56) References cited:
- CN-A- 113 115 621
- CN-A- 113 128 747
- US-A1- 2022 124 973

## Description

### TECHNICAL FIELD

This application relates to a robotic lawnmower and in particular to a system and a method for providing an improved navigation for robotic lawnmowers in such a system.

CN 113 128 747 A discloses a robotic lawnmower system that operates within a working area defined by a physical boundary in the form of a wire and a virtual boundary. The mower comprises magnetic sensors for wire detection, GNSS-based positioning, and a controller that ensures the mower remains within the physical boundary. A virtual map is constructed during mowing based on position and boundary detection data.

### BACKGROUND

Automated or robotic lawnmowers are becoming increasingly more popular and so is the use of the robotic lawnmower in various types of operational areas. Furthermore, there is also a trend for satellite navigation and virtual borders for such robotic lawnmowers. However, even the best satellite navigation may suffer from reduced accuracy in some areas, where satellite reception may be reduced.

Technologies such as Real-Time Kinetics (RTK), where a beacon acts to increase the accuracy also in areas where the satellite reception may be poor have been used for many years, but also these techniques may suffer from low or reduced accuracy in some areas.

On the other hand, traditional boundary wires for marking a (electromagnetic) boundary provide a good accuracy for where the boundary is, and a boundary that is always the same - unlike virtual boundaries which may vary as the satellite reception varies. However, such boundary wires are cumbersome to install.

Thus, there is a need for an improved manner of providing a boundary that is both easy to install and that does not suffer from a reduced accuracy in areas where the satellite reception may be low.

### SUMMARY

The inventors are proposing to achieve this by combining two navigational systems; namely a satellite-based navigation system (such as GPS (or similar) or RTK (or similar)) and a wire-based navigation system, but to only rely on the wire-based navigation system in specific circumstances.

It is therefore an object of the teachings of this application to overcome or at least reduce those problems by providing a robotic lawnmower system comprising a boundary wire and a robotic lawnmower arranged to operate in an operational area bounded by a virtual boundary, the robotic lawnmower comprising one or more magnetic sensors, a satellite navigation sensor and a controller, wherein the controller is configured to: cause the robotic lawnmower to operate in the operational area according to the virtual boundary based on the one or more satellite navigation sensors, determine that the robotic lawnmower is approaching the boundary wire, determine a distance (d) between the virtual boundary and the boundary wire at the boundary location,
compare the determined distance (d) to a mode determination distance (D), and
if the determined distance (d) is greater than the mode determination distance D, the robotic lawnmower is configured to cross the boundary wire and continue operating within the virtual boundary, or
if the determined distance (d) is less than the mode determination distance (D), the robotic lawnmower is configured to continue to operate within the boundary wire.

This has the benefit that the robotic lawnmower is enabled to operate safely even in areas where there is a shadow, while still being able to have a secure physical boundary which is also easy to install as it does not need to be installed in the whole operational area, only where the extra accuracy is needed. The combination of the wire and the satellite navigation provides for a safe boundary in areas of particular interest.

In some embodiments the controller is further configured to determine a boundary location, and determine the distance (d) between the virtual boundary and the boundary wire at the boundary location.

In some embodiments the controller is further configured to, if the determined distance (d) is less than the mode determination distance (D), obey the boundary wire and turn or reverse away from the boundary wire.

In some embodiments the controller is further configured to determine the distance (d) to be the shortest distance between the virtual boundary (220B) and the boundary wire.

In some embodiments the controller is further configured to determine the distance (d) to be a distance between the virtual boundary and the boundary wire in a current heading of the robotic lawnmower.

In some embodiments the controller is further configured to determine the distance (d) to be a distance between the virtual boundary and the boundary wire in a direction between similarly extending sections of the virtual boundary and the boundary wire.

In some embodiments the controller is further configured to determine the distance (d) to be a distance between the virtual boundary and the boundary wire in a direction substantially parallel to a normal to the boundary wire.

In some embodiments two sections are similarly extending if they are parallel or their extensions are within the same general heading, within an angular range of 5, 10, 20 or 30 degrees.

In some embodiments the boundary location is a location of the boundary wire.

In some embodiments the boundary location is a current location of the robotic lawnmower.

In some embodiments the controller is further configured to determine that the boundary wire is being approached by detecting an amplitude of a magnetic field emitted by the boundary wire.

In some embodiments the controller is further configured to determine that the boundary wire is being approached by detecting that the amplitude of the magnetic field increases above a threshold amplitude detection level.

In some embodiments the controller is further configured to determine that the boundary wire is being approached by detecting that the amplitude of the magnetic field increases at a rate above a threshold rate detection level.

In some embodiments the controller is further configured to determine that the boundary wire is being approached by detecting that the amplitude of the magnetic field by detecting that the amplitude of the magnetic field shifts in polarity.

In some embodiments the satellite navigation sensor is a GPS sensor.

In some embodiments the satellite navigation sensor is a RTK sensor.

It is also an object of the teachings of this application to overcome the problems by providing a method for use in a robotic lawnmower system comprising a boundary wire and a robotic lawnmower arranged to operate in an operational area bounded by a virtual boundary, the robotic lawnmower comprising one or more magnetic sensors, one or more satellite navigation sensors and a controller, wherein the method comprises: causing the robotic lawnmower to operate in the operational area according to the virtual boundary based on the one or more satellite navigation sensors, determining that the robotic lawnmower is approaching the boundary wire, determining a distance (d) between the virtual boundary and the boundary wire, comparing the determined distance (d) to a mode determination distance (D), and if the determined distance (d) is greater than the mode determination distance D, causing the robotic lawnmower to cross the boundary wire and continue operating within the virtual boundary, or if the determined distance (d) is less than the mode determination distance (D), causing the robotic lawnmower to continue to operate within the boundary wire.

Further embodiments and aspects are as in the attached patent claims and as discussed in the detailed description.

Other features and advantages of the disclosed embodiments will appear from the following detailed disclosure, from the attached dependent claims as well as from the drawings.

### BRIEF DESCRIPTION OF THE DRAWINGS

The invention will be described in further detail under reference to the accompanying drawings in which:
Figure 1 shows a schematic view of the components of an example of a robotic lawnmower according to some example embodiments of the teachings herein;
Figure 2 shows a schematic view of a robotic lawnmower system according to some example embodiments of the teachings herein;
Figure 3 shows a schematic view of a wire through which a varying electrical signal is transmitted;
Figure 4A shows a schematic view of a robotic lawnmower system according to some example embodiments of the teachings herein;
Figure 4B shows a schematic view of a robotic lawnmower system according to some example embodiments of the teachings herein; and
Figure 5 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

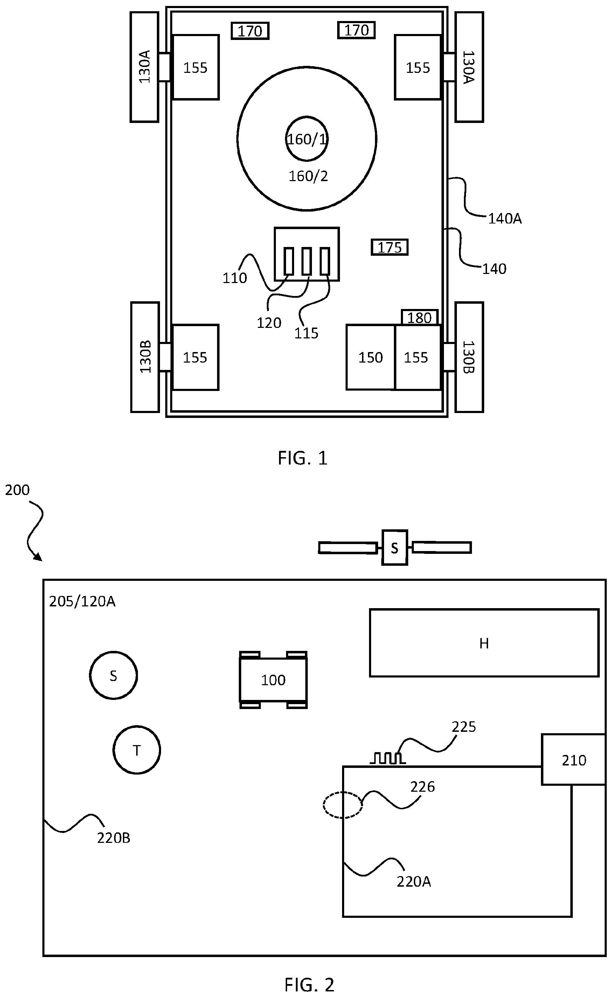

Figure 1 shows a schematic overview of a robotic lawnmower 100, here exemplified by a robotic lawnmower 100. The robotic lawnmower 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within a work area, where the robotic lawnmower propels itself across or around the work area in a pattern (random or predetermined).

The robotic lawnmower 100, exemplified as a robotic lawnmower 100, has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150.

It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few.

The robotic lawnmower 100 also comprises a grass cutting device 160, such as a rotating blade 160/2 driven by a cutter motor 160/1.

The robotic lawnmower 100 further comprises at least one satellite signal navigation sensor 175 configured to provide navigational information (such as position) based on receiving one or more signals from a satellite - possibly in combination with receiving a signal from a beacon. In some embodiments the satellite navigation sensor is a GPS (Global Positioning System) device or other Global Navigation Satellite System (GNSS) device. In some embodiments the satellite navigation sensor is a RTK sensor.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 100 to navigate with reference to a boundary wire (referenced 220A in figure 2) emitting a magnetic field (referenced 226 in figure 2) caused by a control signal (referenced 225 in figure 2) transmitted through the wire, the robotic lawnmower 100 is configured to have at least one magnetic field sensor 170 arranged to detect the magnetic field and for detecting the wire and/or for receiving (and possibly also sending) information to/from a signal generator (will be discussed with reference to figure 2). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the wire. This enables the controller 110 to determine whether the robotic lawnmower 100 is close to or crossing the boundary wire, or inside or outside an area enclosed by the boundary wire. In some embodiments the robotic lawnmower 100 is arranged with more than one magnetic sensor 170 which enables for an improved following of a wire where for example the orientation with regards to the wire can be taken into consideration. Using more than one magnetic sensor 170, for example 2 sensors, enables the robotic lawnmower 100 to follow a wire by straddling the wire with one sensor on either side of the wire.

The robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the work area 205. In some embodiments, the map application includes one or more start regions and one or more goal regions for each work area. In some embodiments, the map application also includes one or more transport areas. The robotic lawnmower 100 is in some embodiments arranged to navigate according to the map based on the satellite navigation sensor 175.

Figure 2 shows a robotic lawnmower system 200 in some embodiments. The schematic view is not to scale. The robotic lawnmower system 200 comprises one or more robotic lawnmowers 100 according to the teachings herein. It should be noted that the operational area 205 shown in figure 2 is simplified for illustrative purposes. The schematic view of figure 2 also illustrates a graphic representation of a map application 120A stored in the memory of the robotic lawnmower 100 as discussed in the above.

The robotic lawnmower system 200 further comprises a station 210 possibly at a station location. A station location may alternatively or additionally indicate a service station, a parking area, a charging station or a safe area where the robotic lawnmower may remain for a time period between or during operation session.

The robotic lawnmower system comprises a boundary wire 220A through which a control signal 225 is transmitted thereby generating a magnetic field 226, and which magnetic field 226 is sensed by sensor (170) in the robotic lawnmower 100. In some embodiments the control signal 225 is generated by a signal generator comprised in the station 210.

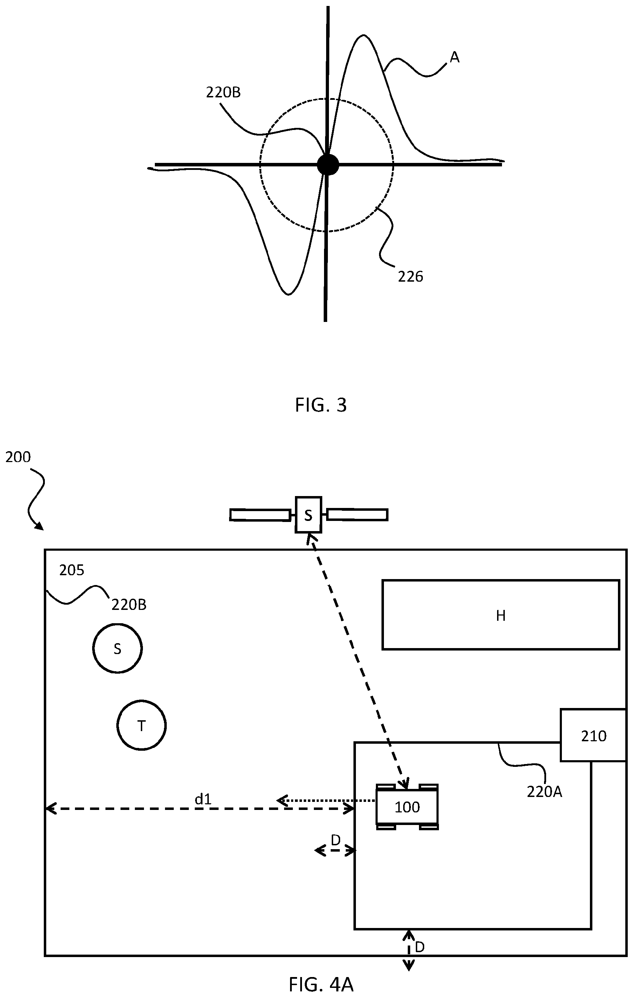

The control signal 225 is an electric signal that generates a magnetic field 226 around the wire through which the control signal is transmitted. In some embodiments, the control signal 225 is a pulsed signal comprising one or more pulses. In some embodiments, the control signal 225. Figure 3 shows a schematic view of how the amplitude A of the magnetic field 226 caused by the control signal 225 being transmitted through the boundary wire 220A varies with the distance to the boundary wire 220A. As can be seen the amplitude experiences a rapid increase in amplitude close to the boundary wire 225A and a very rapid decrease in amplitude immediately over the boundary wire whereby a polarity shift occurs. This is all well-known in the art, and figure 3 serves to illustrate that a robotic lawnmower 100 approaching a boundary wire 220A, will be able to detect this by noting an increase in the amplitude of the sensed magnetic field. The robotic lawnmower 100 is thus able to determine that a boundary wire is being approached by detecting the amplitude of the magnetic field.

It should be noted herein that there will be made no difference between the boundary wire 220A and the electromagnetic boundary 220A as the wire constitutes the boundary.

In some embodiments the robotic lawnmower 100 is configured to determine that a boundary wire is being approached by detecting that the amplitude of the magnetic field increases above a threshold amplitude detection level. The amplitude detection level can be set to correspond to a distance to the boundary wire 220A.

In some embodiments the robotic lawnmower 100 is configured to determine that a boundary wire is being approached by detecting that the amplitude of the magnetic field increases at a rate above a threshold rate detection level. The rate detection level can be set to correspond to a distance to the boundary wire 220A.

In some embodiments the robotic lawnmower 100 is configured to determine that a boundary wire is being approached or rather about to be crossed (crossed by at least one magnetic sensor 170) by detecting that the amplitude of the magnetic field shifts in polarity.

In addition to the boundary generated by the boundary wire 220A, the robotic lawnmower 100 is also arranged to operate according to a virtual boundary 220B specified in the map application 120A based on the satellite navigation sensor(s) 175, and/or the deduced reckoning sensors 180.

In some embodiments the robotic lawnmower is arranged or configured to traverse and operate in work areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in a work area that contains obstacles that are not easily discerned from the ground. Examples of such are grass or moss-covered rocks, roots or other obstacles that are close to ground and of a similar colour or texture as the ground. The robotic lawnmower is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 205 exemplified with referenced to figure 2, may thus be such a non-uniform work area as disclosed in this paragraph that the robotic lawnmower is arranged to traverse and/or operate in.

As is shown in figure 2 there may be obstacles such as houses (referenced H), structures, trees (referenced T), stones (referenced S) to mention a few examples that block signal reception in certain areas, hereafter referred to as shadowed areas. In figure 2A such obstacles are indicated and referenced H (as in house).

It should be noted herein that for illustrative purposes only a single satellite is shown, whereas - and as a skilled person would know - it requires a reliable reception of signals from at least 3 satellites and/or beacons for the robotic lawnmower to be able to determine a position with any kind of accuracy. In fact, in most implementations many more signals are required. It should also be noted that even in a shadowed area, the robotic lawnmower may be able to receive signals from more than three satellites, but not at a signal level where a reliable lock can be established. A shadowed area can thus be defined as an area where the robotic lawnmower is unable to receive sufficiently reliable signal reception, i.e. when the number of signals received reliably is under a threshold number, and where a signal is reliably received when it is received at a signal quality level exceeding a threshold value.

It should be noted that even though it is not specifically shown, a beacon is also arranged in or adjacent to the work area in embodiments where the robotic lawnmower is arranged to utilize RTK navigation.

In the below, several embodiments of how the robotic lawnmower may be adapted will be disclosed. It should be noted that all embodiments may be combined in any combination providing a combined adaptation of the robotic lawnmower.

Figure 4A shows a similar view of a robotic lawnmower system 200 as in figure 2, where the robotic lawnmower 100 is configured to operate based on both satellite navigation utilizing one or more satellite navigation sensors 175 according to a virtual boundary 220B (being part of the map application 120A) and according to an electromagnetic boundary 220A, such as a boundary wire 220A utilizing one or more magnetic sensors 170.

In the example illustrated in figure 4A, showing a similar robotic lawnmower system 200 as in figure 2, the robotic lawnmower 100 is approaching the electromagnetic boundary 220A, which can be detected as discussed in relation to figure 3. The robotic lawnmower 100 is then configured to determine a boundary location. The boundary location is in some embodiments the location of the boundary wire 220A and in some embodiments the (current) location of the robotic lawnmower 100. In some embodiments the location of robotic lawnmower is determined based on the satellite sensor and/or deduced navigation sensor. And, in some embodiments the location of robotic lawnmower is determined based on the detection of the boundary wire wherein the location of the boundary wire gives the location of the robotic lawnmower.

In some embodiments the location of the boundary wire is determined based on the map application 120A, wherein the location of the boundary wire is stored in the map application 120A. This allows for an accurate determination of position even when the satellite reception is weak as the robotic lawnmower knows that the boundary wire has been approached.

The robotic lawnmower 100 compares the boundary location to the virtual boundary 220B and determines a distance d between the virtual boundary 220B and the electromagnetic boundary 220A at the boundary location. In some embodiments, the distance d is determined to be the shortest distance between the virtual boundary 220B and the electromagnetic boundary 220A. In some such embodiments, the distance d is determined to be the distance between the virtual boundary 220B and the electromagnetic boundary 220A in a current heading of the robotic lawnmower 100. In some alternative or additional such embodiments, the distance d is determined to be the distance between the virtual boundary 220B and the electromagnetic boundary 220A in a direction between similarly extending sections of the virtual boundary 220B and the electromagnetic boundary 220A. two sections are similarly extending if they are parallel or their extensions are within the same general heading, within an angular range of 5, 10, 20 or 30 degrees. In some alternative or additional such embodiments, the distance d is determined to be the distance between the virtual boundary 220B and the electromagnetic boundary 220A in a direction substantially (within +/- 5 degrees) parallel to a normal to the electromagnetic boundary 220A.

The robotic lawnmower 100 is further configured to compare the determined distance d to a mode determination distance D. If the determined distance d is greater than the mode determination distance D, the robotic lawnmower 100 is configured to disregard the boundary wire 220A and will be allowed to cross the boundary wire 220A and continue operating within the virtual boundary 220B. If the determined distance d is less than the mode determination distance D, the robotic lawnmower 100 is configured to obey the boundary wire 220A and turns or reverses away from the boundary wire 220A and continues to operate within the electromagnetic boundary 220A.

In the example of figure 4A, the determined distance d1 is greater than the mode determination distance D, and the robotic lawnmower 100 crosses the boundary wire 220A and continues to operate within the virtual boundary 220B as indicated by the dotted arrow.

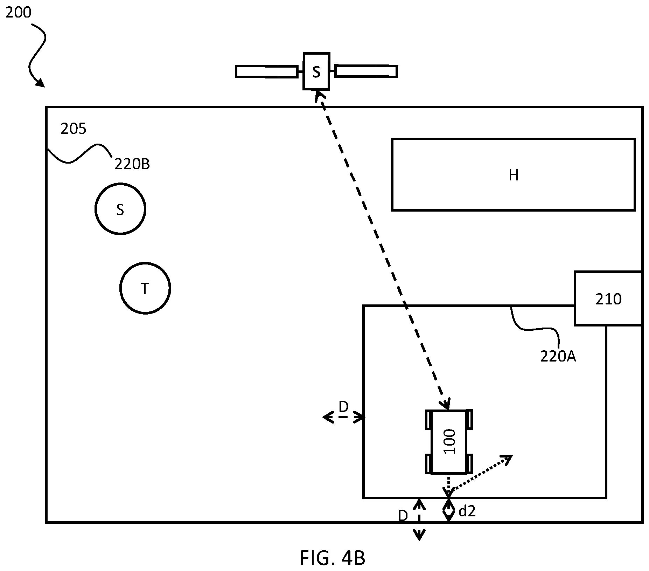

In the example of figure 4B, showing a similar robotic lawnmower system 200 as in figure 4A, the determined distance d2 is greater than the mode determination distance D, and the robotic lawnmower 100 turns away from the boundary wire 220A and continues to operate within the electromagnetic boundary 220A as indicated by the dotted arrow.

The mode determination distance is in some embodiments a distance, and in some embodiments a representation corresponding to a distance. The mode determination distance is in some embodiments an absolute distance, such as 20, 30, 40, 50, 60, 70, 80, 90 or 100 cm or any range there-in-between. The mode determination distance is in some alternative embodiments a relative distance, such as 20, 30, 40, 50, 60, 70, 80, 90 or 100% of the length of the robotic lawnmower 100, or such as 25, 50, 75, 100, 125, or 150% of the length of the work tool 160.

This system thus provides a robotic lawnmower system that allows for a boundary that is easy to install and still highly accurate in all places, as the electromagnetic boundary 220A need only be placed at locations where the high accuracy is needed always.

To re-iterate, an RTK equipped robotic lawnmower has centimeter-level accuracy under good satellite reception conditions and will therefore stay inside a predefined virtual operational area. However, when bad reception conditions occur due to sky view obstruction and multipath, the robotic lawnmower will lose RTK position accuracy and may not be able to operate and finally stop in the garden. Using a boundary wire at these locations solves the bad reception problem and lets the robotic lawnmower continue working.

The hybrid operation taught herein thereby provides a solution to this and other problems of the prior art.

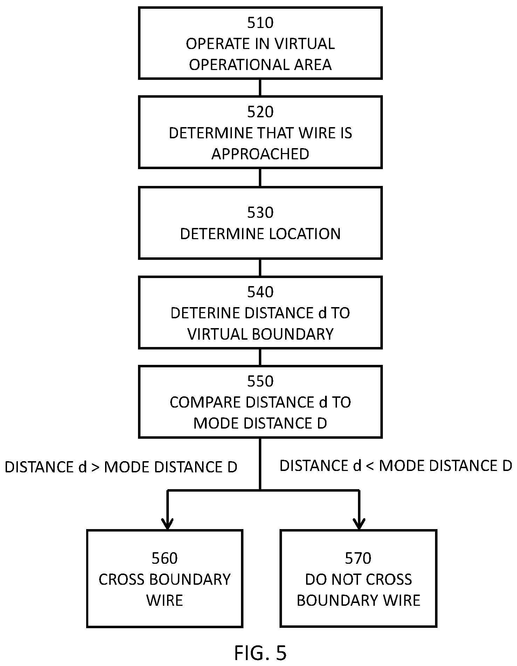

Figure 5 shows a flowchart for a general method according to herein. The method is for use in a robotic lawnmower as in figure 1 in a manner as discussed above in relation to figures 4A and 4B. The method comprises the robotic lawnmower 100 operating 510 in the operational area 205 according to the virtual boundary 220B based on the one or more satellite navigation sensors 175, determining 520 that the robotic lawnmower 100 is approaching the boundary wire 220A, determining 530 a boundary location, determining 540 a distance d between the virtual boundary 220B and the boundary wire 220A at the boundary location, comparing 550 the determined distance d to a mode determination distance D, and if the determined distance d is greater than the mode determination distance D, causing the robotic lawnmower 100 to cross the boundary wire 220A and continue operating within the virtual boundary 220B, or if the determined distance d is less than the mode determination distance D, causing the robotic lawnmower 100 to continue to operate within the boundary wire 220A.

## Claims

1. A robotic lawnmower system (200) comprising a boundary wire (220A) and a robotic lawnmower (100) arranged to operate in an operational area (205) bounded by a virtual boundary (220B), the robotic lawnmower (100) comprising one or more magnetic sensors (170), one or more satellite navigation sensors (175) and a controller (110), wherein the controller (110) is configured to:
cause the robotic lawnmower (100) to operate in the operational area (205) according to the virtual boundary (220B) based on the one or more satellite navigation sensors (175),
determine that the robotic lawnmower (100) is approaching the boundary wire (220A),
determine a distance (d) between the virtual boundary (220B) and the boundary wire (220A) at a boundary location, wherein the distance (d) between the virtual boundary (220B) and the boundary wire (220A) is determined to be the distance (d) between the virtual boundary (220B) and the boundary wire (220A) and wherein the boundary location is a current location of the robotic lawnmower (100),
compare the determined distance (d) to a mode determination distance (D), and
if the determined distance (d) is greater than the mode determination distance D, the robotic lawnmower (100) is configured to cross the boundary wire (220A) and continue operating within the virtual boundary (220B), or
if the determined distance (d) is less than the mode determination distance (D), the robotic lawnmower (100) is configured to continue to operate within the boundary wire (220A).

2. The robotic lawnmower system (200) according to claim 1, wherein the controller (110) is further configured to, if the determined distance (d) is less than the mode determination distance (D), obey the boundary wire (220A) and turn or reverse away from the boundary wire (220A).

3. The robotic lawnmower system (200) according to any preceding claim, wherein the controller is further configured to determine that the boundary wire (220A) is being approached by detecting an amplitude of a magnetic field (226) emitted by the boundary wire (220A).

4. The robotic lawnmower system (200) according to claim 3, wherein the controller is further configured to determine that the boundary wire (220A) is being approached by detecting that the amplitude of the magnetic field (226) increases above a threshold amplitude detection level.

5. The robotic lawnmower system (200) according to claim 3, wherein the controller is further configured to determine that the boundary wire (220A) is being approached by detecting that the amplitude of the magnetic field (226) increases at a rate above a threshold rate detection level.

6. The robotic lawnmower system (200) according to claim 3, wherein the controller is further configured to determine that the boundary wire (220A) is being approached by detecting that the amplitude of the magnetic field (226) by detecting that the amplitude of the magnetic field (226) shifts in polarity.

7. The robotic lawnmower system (200) according to any preceding claim, wherein the satellite navigation sensor is a Global Positioning System, GPS, sensor (175).

8. The robotic lawnmower system (200) according to any preceding claim, wherein the satellite navigation sensor is a Real-Time Kinetics, RTK, sensor (175).

9. A method for use in a robotic lawnmower system (200) comprising a boundary wire (220A) and a robotic lawnmower (100) arranged to operate in an operational area (205) bounded by a virtual boundary (220B), the robotic lawnmower (100) comprising one or more magnetic sensors (170), one or more satellite navigation sensors (175) and a controller (110), wherein the method comprises:
causing the robotic lawnmower (100) to operate in the operational area (205) according to the virtual boundary (220B) based on the one or more satellite navigation sensors (175),
determining that the robotic lawnmower (100) is approaching the boundary wire (220A),
determining a distance (d) between the virtual boundary (220B) and the boundary wire (220A) at a boundary location, wherein the distance (d) between the virtual boundary (220B) and the boundary wire (220A) is determined to be the distance (d) between the virtual boundary (220B) and the boundary wire (220A) and wherein the boundary location is a current location of the robotic lawnmower (100),
comparing the determined distance (d) to a mode determination distance (D), and
if the determined distance (d) is greater than the mode determination distance D, causing the robotic lawnmower (100) to cross the boundary wire (220A) and continue operating within the virtual boundary (220B), or
if the determined distance (d) is less than the mode determination distance (D), causing the robotic lawnmower (100) to continue to operate within the boundary wire (220A).

## Patentansprüche

1. Mährobotersystem (200), umfassend einen Begrenzungsdraht (220A) und einen Mähroboter (100), der angeordnet ist, um in einem Betriebsbereich (205) in Betrieb zu sein, der durch eine virtuelle Begrenzung (220B) begrenzt ist, der Mähroboter (100) umfassend einen oder mehrere Magnetsensoren (170), einen oder mehrere Satellitennavigationssensoren (175) und eine Steuerung (110), wobei die Steuerung (110) konfiguriert ist zum:
Veranlassen, dass der Mähroboter (100) in dem Betriebsbereich (205) entsprechend der virtuellen Begrenzung (220B) basierend auf dem einen oder den mehreren Satellitennavigationssensoren (175) in Betrieb ist,
Bestimmen, dass sich der Mähroboter (100) dem Begrenzungsdraht (220A) nähert,
Bestimmen einer Distanz (d) zwischen der virtuellen Begrenzung (220B) und dem Begrenzungsdraht (220A) an einem Begrenzungsstandort, wobei die Distanz (d) zwischen der virtuellen Begrenzung (220B) und dem Begrenzungsdraht (220A) als die Distanz (d) zwischen der virtuellen Begrenzung (220B) und dem Begrenzungsdraht (220A) bestimmt wird und wobei der Begrenzungsstandort ein aktueller Standort des Mähroboters (100) ist,
Vergleichen der bestimmten Distanz (d) mit einer Modusbestimmungsdistanz (D) und falls die bestimmte Distanz (d) größer als die Modusbestimmungsdistanz D ist, der Mähroboter (100) konfiguriert ist, um den Begrenzungsdraht (220A) zu überqueren und seinen Betrieb innerhalb der virtuellen Begrenzung (220B) fortzusetzen, oder
falls die bestimmte Distanz (d) kleiner als die Modusbestimmungsdistanz (D) ist, der Mähroboter (100) konfiguriert ist, um seinen Betrieb innerhalb des Begrenzungsdrahtes (220A) fortzusetzen.

2. Mährobotersystem (200) nach Anspruch 1, wobei die Steuerung (110) ferner konfiguriert ist, um, falls die bestimmte Distanz (d) kleiner als die Modusbestimmungsdistanz (D) ist, dem Begrenzungsdraht (220A) zu folgen und von dem Begrenzungsdraht (220A) weg abzubiegen oder rückwärts zu fahren.

3. Mährobotersystem (200) nach einem der vorstehenden Ansprüche, wobei die Steuerung ferner konfiguriert ist, um zu bestimmen, dass eine Annäherung an den Begrenzungsdraht (220A) erfolgt, durch Erkennen einer Amplitude eines Magnetfelds (226), das durch den Begrenzungsdraht (220A) ausgesendet wird.

4. Mährobotersystem (200) nach Anspruch 3, wobei die Steuerung ferner konfiguriert ist, um zu bestimmen, dass eine Annäherung an den Begrenzungsdraht (220A) erfolgt, durch Erkennen, dass die Amplitude des Magnetfelds (226) über einen Schwellenwert für die Amplitudenerkennung ansteigt.

5. Mährobotersystem (200) nach Anspruch 3, wobei die Steuerung ferner konfiguriert ist, um zu bestimmen, dass eine Annäherung an den Begrenzungsdraht (220A) erfolgt, durch Erkennen, dass die Amplitude des Magnetfelds (226) mit einer Rate über einen Schwellenwert für die Ratenerkennung ansteigt.

6. Mährobotersystem (200) nach Anspruch 3, wobei die Steuerung ferner konfiguriert ist, um zu bestimmen, dass eine Annäherung an den Begrenzungsdraht (220A) erfolgt, durch Erkennen, dass sich die Amplitude des Magnetfelds (226) durch Erkennen, dass sich die Amplitude des Magnetfelds (226) in einer Polarität ändert.

7. Mährobotersystem (200) nach einem der vorstehenden Ansprüche, wobei der Satellitennavigationssensor ein Sensor (175) eines globalen Positionsbestimmungssystems, GPS-Sensor, ist.

8. Mährobotersystem (200) nach einem der vorstehenden Ansprüche, wobei der Satellitennavigationssensor ein Echtzeitkinematiksensor (175), RTK-Sensor, ist.

9. Verfahren zur Verwendung in einem Mährobotersystem (200), umfassend einen Begrenzungsdraht (220A) und einen Mähroboter (100), der angeordnet ist, um in einem Betriebsbereich (205) in Betrieb zu sein, der durch eine virtuelle Begrenzung (220B) begrenzt ist, der Mähroboter (100) umfassend einen oder mehrere Magnetsensoren (170), einen oder mehrere Satellitennavigationssensoren (175) und eine Steuerung (110),wobei das Verfahren umfasst:
Veranlassen, dass der Mähroboter (100) in dem Betriebsbereich (205) entsprechend der virtuellen Begrenzung (220B) basierend auf dem einen oder den mehreren Satellitennavigationssensoren (175) in Betrieb ist,
Bestimmen, dass sich der Mähroboter (100) dem Begrenzungsdraht (220A) nähert,
Bestimmen einer Distanz (d) zwischen der virtuellen Begrenzung (220B) und dem Begrenzungsdraht (220A) an einem Begrenzungsstandort, wobei die Distanz (d) zwischen der virtuellen Begrenzung (220B) und dem Begrenzungsdraht (220A) als die Distanz (d) zwischen der virtuellen Begrenzung (220B) und dem Begrenzungsdraht (220A) bestimmt wird und wobei der Begrenzungsstandort ein aktueller Standort des Mähroboters (100) ist,
Vergleichen der bestimmten Distanz (d) mit einer Modusbestimmungsdistanz (D) und
falls die bestimmte Distanz (d) größer als die Modusbestimmungsdistanz D ist, Veranlassen des Mähroboters (100), den Begrenzungsdraht (220A) zu überqueren und seinen Betrieb innerhalb der virtuellen Begrenzung (220B) fortzusetzen, oder
falls die bestimmte Distanz (d) kleiner als die Modusbestimmungsdistanz (D) ist, Veranlassen des Mähroboters (100), seinen Betrieb innerhalb des Begrenzungsdrahtes (220A) fortzusetzen.

## Revendications

1. Système de tondeuse à gazon robotisée (200) comprenant un câble périphérique (220A) et une tondeuse à gazon robotisée (100) agencée pour fonctionner dans une zone opérationnelle (205) délimitée par une frontière virtuelle (220B), la tondeuse à gazon robotisée (100) comprenant un ou des capteurs magnétiques (170), un ou des capteurs de navigation par satellite (175) et un contrôleur (110), dans lequel le contrôleur (110) est configuré pour :
faire fonctionner la tondeuse à gazon robotisée (100) dans la zone opérationnelle (205) en fonction de la limite virtuelle (220B) basée sur un ou des capteurs de navigation par satellite (175),
déterminer que la tondeuse à gazon robotisée (100) s'approche du câble périphérique (220A),
déterminer une distance (d) entre la limite virtuelle (220B) et le câble périphérique (220A) à un emplacement limite, dans lequel la distance (d) entre la limite virtuelle (220B) et le câble périphérique (220A) est déterminée comme étant la distance (d) entre la limite virtuelle (220B) et le câble périphérique (220A) et dans lequel l'emplacement limite est l'emplacement actuel de la tondeuse à gazon robotisée (100),
comparer la distance déterminée (d) à une distance de détermination de mode (D), et si la distance déterminée (d) est supérieure à la distance de détermination de mode D, la tondeuse à gazon robotisée (100) est configurée pour franchir le câble périphérique (220A) et continuer à fonctionner à l'intérieur de la frontière virtuelle (220B), ou
si la distance déterminée (d) est inférieure à la distance de détermination du mode (D), la tondeuse à gazon robotisée (100) est configurée pour continuer à fonctionner à l'intérieur du câble périphérique (220A).

2. Système de tondeuse à gazon robotisée (200) selon la revendication 1, dans lequel le contrôleur (110) est en outre configuré pour, si la distance déterminée (d) est inférieure à la distance de détermination de mode (D), obéir au câble périphérique (220A) et tourner ou faire marche arrière en s'éloignant du câble périphérique (220A).

3. Système de tondeuse à gazon robotisée (200) selon l'une quelconque des revendications précédentes, dans lequel le contrôleur est en outre configuré pour déterminer que le câble périphérique (220A) est approché en détectant une amplitude d'un champ magnétique (226) émis par le câble périphérique (220A).

4. Système de tondeuse à gazon robotisée (200) selon la revendication 3, dans lequel le contrôleur est en outre configuré pour déterminer que le câble périphérique (220A) est approché en détectant que l'amplitude du champ magnétique (226) augmente au-dessus d'un niveau de détection d'amplitude seuil.

5. Système de tondeuse à gazon robotisée (200) selon la revendication 3, dans lequel le contrôleur est en outre configuré pour déterminer que le câble périphérique (220A) est approché en détectant que l'amplitude du champ magnétique (226) augmente à un taux supérieur à un niveau de détection de taux seuil.

6. Système de tondeuse à gazon robotisée (200) selon la revendication 3, dans lequel le contrôleur est en outre configuré pour déterminer que le câble périphérique (220A) est approché en détectant que l'amplitude du champ magnétique (226) en détectant que l'amplitude du champ magnétique (226) change de polarité.

7. Système de tondeuse à gazon robotisée (200) selon l'une quelconque des revendications précédentes, dans lequel le capteur de navigation par satellite est un capteur de système mondial de positionnement, GPS (175).

8. Système de tondeuse à gazon robotisée (200) selon l'une quelconque des revendications précédentes, dans lequel le capteur de navigation par satellite est un capteur cinétique en temps réel, RTK (175).

9. Procédé à utiliser dans un système de tondeuse à gazon robotisée (200) comprenant un câble périphérique (220A) et une tondeuse à gazon robotisée (100) agencée pour fonctionner dans une zone opérationnelle (205) délimitée par une frontière virtuelle (220B), la tondeuse à gazon robotisée (100) comprenant un ou des capteurs magnétiques (170), un ou des capteurs de navigation par satellite (175) et un contrôleur (110), dans lequel le procédé comprend :
le fait d'amener la tondeuse à gazon robotisée (100) à fonctionner dans la zone opérationnelle (205) conformément à la limite virtuelle (220B) sur la base d'un ou des capteurs de navigation par satellite (175),
la détermination du fait que la tondeuse à gazon robotisée (100) s'approche du câble périphérique(220A),
la détermination du fait qu'une distance (d) entre la limite virtuelle (220B) et le câble périphérique (220A) à un emplacement limite, dans lequel la distance (d) entre la limite virtuelle (220B) et le câble périphérique (220A) est déterminée comme étant la distance (d) entre la limite virtuelle (220B) et le câble périphérique (220A) et dans lequel l'emplacement limite est l'emplacement actuel de la tondeuse à gazon robotisée (100),
la comparaison de la distance déterminée (d) à une distance de détermination de mode (D), et
si la distance déterminée (d) est supérieure à la distance de détermination de mode D, le fait de faire en sorte que la tondeuse à gazon robotisée (100) franchisse le câble périphérique (220A) et continue à fonctionner à l'intérieur du périmètre virtuel (220B), ou
si la distance déterminée (d) est inférieure à la distance de détermination du mode (D), le fait d'amener la tondeuse à gazon robotisée (100) à continue à fonctionner à l'intérieur du câble périphérique (220A).
